(19) **Europäisches Patentamt / European Patent Office / Office européen des brevets**

(11) **EP 1 806 311 A2**

(12) # EUROPÄISCHE PATENTANMELDUNG

(43) Veröffentlichungstag:
**11.07.2007 Patentblatt 2007/28**

(51) Int Cl.:
**B66C 13/22** *(2006.01)* **G01S 13/87** *(2006.01)*

(21) Anmeldenummer: **07000275.3**

(22) Anmeldetag: **08.01.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **10.01.2006 DE 102006001279**

(71) Anmelder: **MOBA - Mobile Automation AG**
**65604 Elz (DE)**

(72) Erfinder:
• **Harms, Paul**
  **65589 Steinbach (DE)**
• **Wendebaum, Jochen**
  **65604 Elz (DE)**

(74) Vertreter: **Schoppe, Fritz et al**
**Schoppe, Zimmermann, Stöckeler & Zinkler**
**Patentanwälte**
**Postfach 246**
**82043 Pullach bei München (DE)**

(54) **Kran oder kranähnliche Fördereinrichtung mit einem Positionsmesssystem**

(57) Ein Kran (71) weist eine Katze (77) und eine an der Katze befestigte Basis-Sende- und Empfangseinrichtung (53), die ausgelegt ist, um ein Basis-Sendesignal abzustrahlen und ein Transpondersignal zu empfangen, eine Wiegeeinrichtung zum Bestimmen eines Gewichts einer Last, einen Transponder (55), der an einem vorbestimmten Ort gegenüber dem Kran befestigt ist, und eine Auswertungseinrichtung (53a) zum Bestimmen eines Lastmoments an dem Kran auf.

Fig. 1

**EP 1 806 311 A2**

**Beschreibung**

Die vorliegende Erfindung bezieht sich auf einen Kran mit einem Positionsmesssystem oder einem Lastmomentmesssystem und insbesondere auf einen Kran mit einem System zur Positionsmessung oder einem System zur Lastmomentmessung, um z. B. eine anschließende Begrenzung eines Lastmoments durchzuführen, das eine Messung mittels Funksignalen durchführt.

Immer häufiger werden LPR-Systeme (LPR-System = Lokales Positions-Radar-System) eingesetzt, um berührungslose lokale Ortungsaufgaben durchzuführen. Die LPR-Systeme weisen eine Basisstation auf, die ein Basissignal aussendet und auf das Aussenden des Basissignals hin von einem oder von einer Mehrzahl von Transpondern ein Transpondersignal empfängt. Die Transponder empfangen dabei das von der Basisstation ausgesandte Signal und senden ihrerseits daraufhin ein Transpondersignal an die Basisstation. Die Basisstation ermittelt aus dem Transpondersignal bzw. dem Zeitpunkt, zu dem sie das Transpondersignal empfängt, damit die Laufzeit des Basissignals von der Basisstation zu dem Transponder und/ oder des Transpondersignals von dem Transponder zu der Basisstation und damit einen Abstand zwischen dem Transponder und der Basis. Die Bestimmung der Laufzeit erfolgt dabei über eine Bestimmung der zeitlichen Differenz zwischen dem Zeitpunkt, zu dem die Basisstation das Basissignal ausgesandt hat, und dem Zeitpunkt, zu dem sie das Transpondersignal empfangen hat, unter Berücksichtigung der Zeit, die der Transponder zu der Verarbeitung des empfangenen Signals und der Bereitstellung des Antwortsignals braucht.

Die DE 10336084 A1 erläutert einen Einsatz eines LPR-Systems zur Bestimmung einer Position eines beweglichen Objekts. Die Basisstation ist dabei an einem beweglichen Objekt befestigt, während eine Mehrzahl von Transpondern raumfest in einer Umgebung angeordnet ist. Die Transponder senden dabei jeweils auf das Empfangen des von der Basisstation ausgesandten Basissignals ein Transpondersignal aus, wobei sich die Transpondersignale der jeweiligen Transponder voneinander unterscheiden, so dass die Basisstation eine Zuordnung jedes Transpondersignals zu dem jeweiligen Transponder ermitteln kann, und daraus die jeweiligen Abstände der Transponder von der Basisstation bestimmen kann.

Aus den ermittelten Abständen von den jeweiligen Transpondern bestimmt ein in der Basisstation angeordneter Messrechner die Position des beweglichen Objekts in dem von den Transpondern gebildeten Messkoordinatensystem.

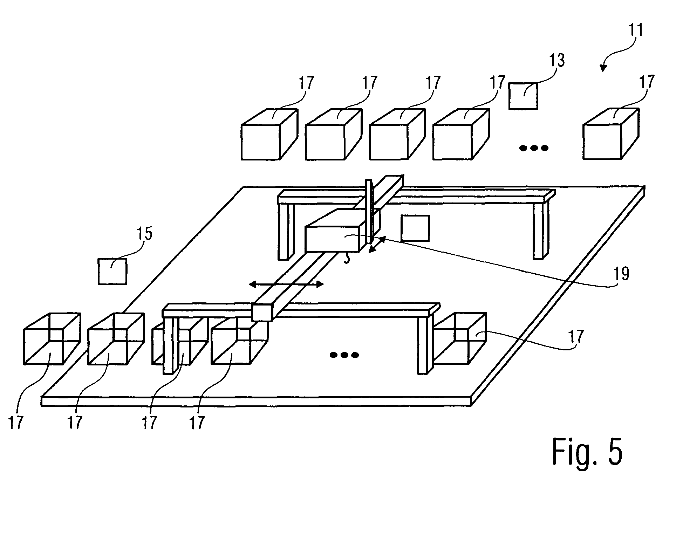

In Fig. 5 ist ein Einsatz eines LPR-Systems an einem herkömmlichen Hallenkran 11 gezeigt. An einer linken Hallendeckenseite 13 und einer rechten Hallendeckenseite 15 ist jeweils eine Mehrzahl an Hallenkran-Transpondern 17 angeordnet. Der Hallenkran 11 weist eine Krankatze 19 auf, an der eine hier nicht gezeigte LPR-Basisstation fixiert ist.

Die an den Wänden / Seiten der Halle aufgebauten Hallenkran-Transponder 17, deren Position in einem Messkoordinatensystem bekannt ist, senden auf ein Empfangen eines Basissignals von der Basisstation des LPR-Systems hin jeweils ein Transpondersignal an die Basisstation.

Ein Messrechner in der LPR-Basisstation wertet die von den Transpondern empfangenen Signale aus und bestimmt damit eine Position der Krankatze 19 gegenüber den jeweiligen Hallenkran-Transpondern 17 und damit eine Position in dem Messkoordinatensystem.

Um eine möglichst zuverlässige und genaue Detektion der Position der Krankatze 19 durchzuführen, ist eine große Anzahl an Hallenkran-Transpondern 17 erforderlich, die jeweils über eine an der LPR-Basisstation angebrachte Rundstrahlantenne mit der Basisstation kommunizieren. Durch die große Anzahl an Hallenkran-Transpondern 17 lassen sich temporäre Verdeckungen einzelner Hallenkran-Transponder 17, die sich während des Einbringens von Hindernissen, z. B. bei einer industriellen Fertigung in dem Messkoordinatensystem ergeben, kompensieren, so dass ein zuverlässiger Betrieb des herkömmlichen Hallenkrans 11 mit dem LPR-System weiterhin möglich ist.

Voraussetzung dafür ist, dass wenigstens drei beliebige Stationen in Sichtweite der Krankatze 19 sind, so dass eine Kommunikation über Funksignale zwischen der Basisstation an der Krankatze 19 und den Hallenkran-Transpondern aufgrund einer Verdeckung eines Transponders nicht beeinträchtigt ist. Da der hier gezeigte Hallenkran 11 mit dem LPR-Positionssystem aus einer hohen Anzahl an physisch getrennten Komponenten, nämlich der hohen Anzahl an Hallenkran-Transpondern 17, der Krankatze 19 sowie der weiteren Komponenten des Krans besteht, ist ein derartiger Hallenkran 11 ungeeignet, um für Arbeitsprozesse an unterschiedlichen Orten eingesetzt zu werden. Denn die hohe Anzahl an Komponenten stellt z. B. einen erheblichen Aufwand für ein Bauunternehmen dar, das einen derartigen Kran mit einem LPR-Positionssystem zum Versetzen von Lasten an unterschiedlichen Bauplätzen einsetzen würde. Somit ist der hier gezeigte Hallenkran 11 mit dem LPR-Positionssystem nicht geeignet, beispielsweise von einer Baufirma an verschiedenen Baustellen eingesetzt zu werden, um dort Lasten zwischen den verschiedenen Orten der Baustelle zu versetzen.

Zugleich ist eine Inbetriebsetzung des in Fig. 5 gezeigten Hallenkrans mit dem Positionsmesssystem sehr aufwändig, da die Positionen der hohen Anzahl an Transpondern 17 vor der Inbetriebsetzung in dem Messkoordinatensystem bestimmt werden müssen, um dem Messrechner in der an der Krankatze 19 montierten Basisstation eine exakte Bestimmung des jeweiligen Ortes zu ermöglichen. Oder die physisch von dem Kran getrennten Transponder müssten an stets vordefinierten Positionen gegenüber dem Kran an dessen Einsatzort angeordnet werden, so dass stets das in dem Messrechner hinterlegte Messkoordinatensystem angewendet werden kann.

Der vorliegenden Erfindung liegt die Aufgabe zugrunde, einen Kran mit einem Messsystem zum Bestimmen einer Position oder eines Lastmoments zu schaffen, der einfacher in Betrieb gesetzt werden kann.

Diese Aufgabe wird durch einen Kran gemäß Anspruch 1 und einen Kran gemäß Anspruch 15 gelöst.

Die vorliegende Erfindung schafft einen Kran, der eine Katze, eine Basis-Sende- und Empfangseinrichtung, die an der Katze befestigt ist und ausgelegt ist, um ein Basis-Sendesignal abzustrahlen und ein erstes und ein zweites Transpondersignal zu empfangen, einen ersten Transponder, der an einem ersten vorbestimmten Ort gegenüber dem Kran befestigt ist und ausgelegt ist, um das Basissende-Signal von der Basis-Sende- und Empfangseinrichtung zu empfangen, und das erste Transpondersignal auf den Empfang des Basis-Sendesignals hin abzustrahlen, einen zweiten Transponder, der an einer Last, die von dem Kran versetzt werden soll, einem Haken, an dem die Last befestigt ist, oder an einem Ziel, zu dem die Last befördert werden soll, befestigt ist und ausgelegt ist, um das Basis-Sendesignal zu empfangen und das zweite Transpondersignal auf den Empfang des Basis-Sendesignals hin abzustrahlen, wobei das zweite Transpondersignal zu dem ersten Transpondersignal unterschiedlich ist, und eine Auswertungseinrichtung, die mit der Basis-Sende- und Empfangseinrichtung gekoppelt ist und ausgelegt ist, um basierend auf dem ersten Transpondersignal und dem Basis-Sendesignal einen Abstand des ersten Transponders von der Katze zu bestimmen, und basierend auf dem zweiten Transpondersignal und dem Basis-Sendesignal einen Abstand des zweiten Transponders von der Katze zu ermitteln, aufweist.

Des Weiteren schafft die vorliegende Erfindung einen Kran, der eine Katze, eine Basis-Sende- und Empfangseinrichtung, die an der Katze befestigt ist und ausgelegt ist, um ein Basis-Sende-Signal abzustrahlen und ein Transpondersignal zu empfangen, eine Wiegeeinrichtung, die ausgelegt ist, um ein Gewicht einer Last, die von dem Kran versetzt wird, zu bestimmen, einen Transponder, der an einem vorbestimmten Ort gegenüber dem Kran befestigt ist und ausgelegt ist, um auf den Empfang des Basis-Sendesignals hin das Transpondersignal abzustrahlen, und eine Auswertungseinrichtung, die mit der Basis-Sende- und Empfangseinrichtung und der Wiegeeinrichtung gekoppelt ist und ausgelegt ist, um basierend auf dem Gewicht der Last, dem Basis-Sendesignal und dem Transpondersignal ein Lastmoment an dem Kran zu ermitteln, aufweist.

Der vorliegenden Erfindung liegt die Erkenntnis zugrunde, dass bei einem Kran mit einem System zum Bestimmen einer Position einer Katze oder eines Lastmoments, bei dem eine Basis-Sende- und Empfangseinrichtung, die an der Katze befestigt ist und mit einem Transponder über ein Funksignal kommuniziert, ein Transponder an einem vorbestimmten Ort gegenüber dem Kran an dem Kran befestigt werden kann. Damit ist ein einfacheres Inbetriebsetzen des erfindungsgemäßen Krans möglich, denn das aufwändige Anordnen des Transponders in dem Arbeitsumfeld des herkömmlichen Krans, so dass dieser in dem Messkoordinatensystem an der vordefinierten Position angeordnet wird, oder ein aufwändiges Bestimmen der Position des Transponders und ein entsprechendes Konfigurieren des Messrechners ist nicht erforderlich, da der Transponder an dem vorbestimmten Ort an dem Kran befestigt ist. Somit ist das LPR-System aus Transponder und Basis-Sende- und Empfangseinrichtung stets automatisch an die in der Auswertungseinrichtung hinterlegten Bedingungen angepasst, auch wenn der Kran an einem neuen Arbeitsort eingesetzt wird.

Das einfachere Inbetriebsetzen des Krans mit dem LPR-Messsystem führt zu einer Reduktion der Zeit, die benötigt wird, um den Kran in Betrieb zu setzen. Denn der Transponder ist so ortsfest an dem Kran befestigt, dass eine Bestimmung der Position der Katze, an der die Basis-Sende- und Empfangseinrichtung angeordnet ist, stets sofort zuverlässig durchgeführt werden kann, ohne dass zusätzliche Arbeitsschritte zur Einstellung oder Konfiguration des LPR-Messsystems erforderlich sind, auch wenn der Kran an einem neuen Arbeitsort eingesetzt wird.

Dadurch, dass die Zeit, die zu einer Inbetriebsetzung des erfindungsgemäßen Krans erforderlich ist, geringer ist als eine Zeit für die Inbetriebsetzung des herkömmlichen Krans, sind damit auch die Betriebskosten bei dem erfindungsgemäßen Kran reduziert.

Zusätzlich ist ein sicherer und zuverlässiger Betrieb des Krans möglich, dadurch dass der Transponder, mittels dem das Lastmoment oder die Position der Katze bestimmt wird, ortsfest an einem vorbestimmten Ort gegenüber dem Kran befestigt ist. Denn das Personal, das den Kran bedient, ist nicht darauf angewiesen, den Transponder an einer bestimmten Stelle in dem Arbeitsumfeld des Krans anzuordnen oder das Messkoordinatensystem bei einem Einsatz an einem neuen Arbeitsort neu zu bestimmen. Somit ist eine mögliche Fehlerquelle durch eine nicht sachgerechte Durchführung der oben erwähnten Arbeitsschritte, die während dem Betrieb des Krans zu einem Sicherheitsrisiko führen könnte, ausgeschlossen.

Des Weiteren ist dadurch, dass der Transponder an dem vorbestimmten Ort gegenüber dem Kran an dem Kran befestigt ist, ein flexiblerer Einsatz in verschiedenen Arbeitsumgebungen möglich. In einem Ausführungsbeispiel der vorliegenden Erfindung kann der Transponder dabei direkt an dem Ausleger des Krans befestigt werden, so dass das Personal, das den Kran bedient, nicht darauf angewiesen ist, z. B. in einem schwer zugänglichen Arbeitsumfeld einen Platz zu bestimmen, an dem der Transponder aufgestellt werden kann.

Bevorzugte Ausführungsbeispiele der vorliegenden Erfindung werden nachfolgend Bezug nehmend auf die beiliegenden Zeichnungen näher erläutert. Es zeigen:

Fig. 1 eine Prinzipskizze eines LPR-Messsystems, das in einem Kran gemäß der vorliegenden Erfindung eingesetzt wird;

Fig. 2    einen Kran gemäß einem Ausführungsbeispiel der vorliegenden Erfindung;

Fig. 3    eine Ausschnittsansicht eines Krans gemäß einem weiteren Ausführungsbeispiel der vorliegenden Erfindung;

Fig. 4    einen Blockschaltplan einer Auswertungseinrichtung in einem Kran gemäß der vorliegenden Erfindung; und

Fig. 5    einen Aufbau eines herkömmlichen Hallenkrans mit einem lokalen Positionsradarsystem.

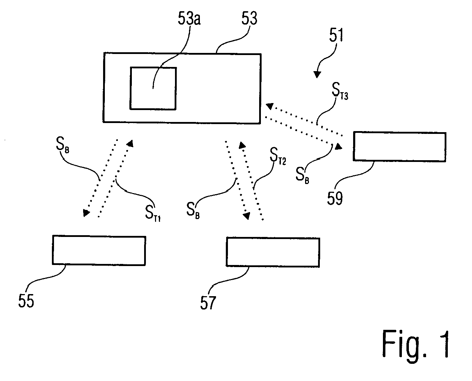

In Fig. 1 ist ein LPR-Messsystem 51 gezeigt, das in einem Kran gemäß der vorliegenden Erfindung eingesetzt wird. Das LPR-Messsystem 51 weist eine Sende- und eine Empfangseinrichtung 53 mit einer Auswertungseinrichtung 53a, die hier in der Sende- und Empfangseinrichtung 53 angeordnet ist und mit dieser gekoppelt ist, einen ersten Transponder 55, einen zweiten Transponder 57 und einen dritten Transponder 59 auf. Der erste Transponder 55 ist von der Sende- und Empfangseinrichtung 53, dem zweiten Transponder 57 und dem dritten Transponder 59 beabstandet angeordnet. Der zweite Transponder 57 ist von der Sende- und Empfangseinrichtung 53 und dem dritten Transponder 59 beabstandet angeordnet, während der dritte Transponder 59 von der Sende- und Empfangseinrichtung 53 beabstandet angeordnet ist.

Die Sende- und Empfangseinrichtung 53 sendet dabei in regelmäßigen Abständen ein Funksignal $S_B$ bzw. ein Basis-Sendesignal aus, das von dem ersten Transponder 55, dem zweiten Transponder 57 und dem dritten Transponder 59 empfangen wird. Auf das Empfangen des Basis-Sendesignals $S_B$ sendet der erste Transponder 55 ein erstes Transpondersignal $S_{T1}$, der zweite Transponder 57 ein zweites Transpondersignal $S_{T2}$ und der dritte Transponder 59 ein drittes Transpondersignal $S_{T3}$ aus. Das erste Transpondersignal $S_{T1}$, das zweite Transpondersignal $S_{T2}$ und das dritte Transpondersignal $S_{T3}$ unterscheiden sich voneinander, z. B. in einer Frequenz des Trägerbands, so dass die Sende- und Empfangseinrichtung 53 jede empfangene Antwort bzw. jedes Transpondersignal $S_{T1}$, $S_{T2}$, $S_{T3}$ dem jeweiligen Transponder 55, 57, 59 zuordnen kann.

Die Transpondersignale $S_{T1}$, $S_{T2}$, $S_{T3}$ werden von der Sende- und Empfangseinrichtung 53 empfangen, und die Auswertungseinrichtung 53a in der Sende- und Empfangseinrichtung 53 ermittelt daraufhin die jeweiligen Zeitpunkte, zu denen das erste Transpondersignal $S_{T1}$, das zweite Transpondersignal $S_{T2}$ und das dritte Transpondersignal $S_{T3}$ nach dem Aussenden des Basis-Sendesignals $S_B$ empfangen worden sind, und bestimmt damit die Laufzeiten des Basis-Sendesignals $S_B$ zu den jeweiligen Transpondern und/ oder die Laufzeiten der Transpondersignale $S_{T1}$, $S_{T2}$, $S_{T3}$ von den Transpondern 55 57, 59 zu der Sende- und Empfangseinrichtung 53. Aus den Laufzeiten der Transpondersignale $S_{T1}$, $S_{T2}$, $S_{T3}$ und/ oder des Basis-Sendesignals ermittelt die Auswertungseinrichtung 53a eine Entfernung des ersten Transponders 55 von der Sende- und Empfangseinrichtung 53, eine Entfernung des zweiten Transponders 57 von der Sende- und Empfangseinrichtung 53 sowie eine Entfernung des dritten Transponders 59 von der Sende- und Empfangseinrichtung 53. Die Auswertungseinrichtung 53a in der Basisstation bzw. in der Sende- und Empfangseinrichtung 53 berücksichtigt zusätzlich die Zeit, die der jeweilige Transponder 55, 57, 59 von einem Empfang des Basis-Sendesignals $S_B$ bis zu einem Versenden der Antwort bzw. des Transpodersignals $S_{T1}$, $S_{T2}$, $S_{T3}$ benötigt.

Anschließend bestimmt die Auswertungseinrichtung 53a die Position der Sende- und Empfangseinrichtung 53 anhand der Informationen über die Entfernungen der Sende- und Empfangseinrichtung von dem ersten Transponder 55, dem zweiten Transponder 57 und dem dritten Transponder 59.

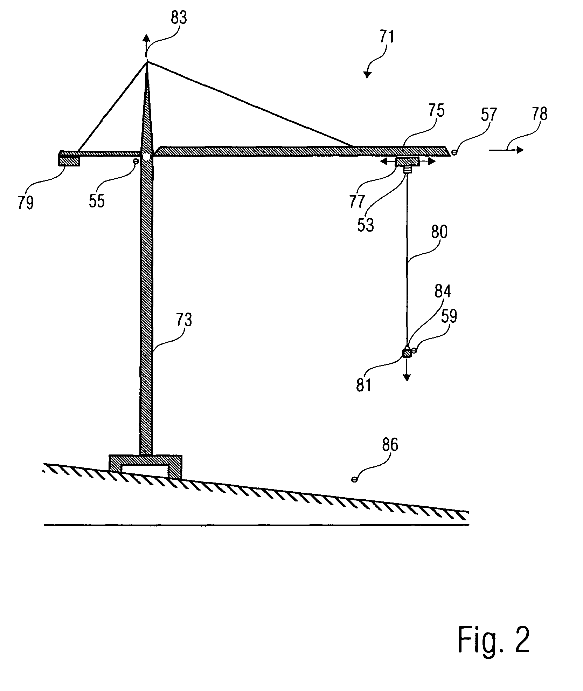

In Fig. 2 ist ein Kran 71 gemäß einem Ausführungsbeispiel der vorliegenden Erfindung gezeigt. Im Folgenden werden gleiche oder gleichwirkende Elemente mit den gleichen Bezugszeichen versehen. Dies gilt insbesondere für das bereits in Fig. 1 erläuterte LPR-Messsystem 51 und damit für die Sende- und Empfangseinrichtung 53, den ersten Transponder 55, den zweiten Transponder 57 und den dritten Transponder 59.

Der Kran 71 gemäß einem Ausführungsbeispiel der vorliegenden Erfindung weist einen Mast 73 und einen an dem Mast befestigten Ausleger 75 auf. An dem Ausleger 75 befindet sich eine Katze 77, die in einer horizontalen Richtung, die durch einen Pfeil 78 dargestellt ist, entlang dem Ausleger 75 gleitet bzw. verfährt. An dem Ausleger 75 ist eine Gegenlast 79 befestigt. Die Sende- und Empfangseinrichtung 53 ist an der Katze 77 befestigt, während der erste Transponder 55 an einem Ort, an dem der Ausleger 75 an dem Mast 73 befestigt ist, angeordnet ist. Der zweite Transponder 57 ist an einer Spitze des Auslegers 75 bzw. der Auslegerspitze angeordnet. Über ein Tragseil 80 ist eine Last 81 an der Katze 77 aufgehängt. Die Last 81 ist dabei über einen Kranhaken 84 mit dem Tragseil 80 mechanisch verbunden. An dem Kranhaken 84 ist eine hier nicht gezeigte Wiegeeinrichtung befestigt. An dem Kranhaken 84 ist der dritte Transponder 59 befestigt. An einem Fuß des Masts 73 ist eine hier nicht gezeigte Zugeinrichtung angebracht, die die Last 81 in einer vertikalen Richtung, die durch einen Pfeil 83 dargestellt ist, bewegt. Ein vierter Transponder 86 ist an einem Ziel, zu dem die Last 81 versetzt werden soll, angeordnet.

Die in der Sende- und Empfangseinrichtung 53 angeordnete Auswertungseinrichtung 53a ermittelt mit dem dargestellten LPR-Messsystem 51, wie in Fig. 1 erläutert, die Position der Katze 77 und der Last 81. Die Auswertungseinrichtung 53a bestimmt damit einen Abstand der Last 81 bzw. der Katze 77 von dem Mast 73. Dieser Abstand wird als eine Strecke KA im Folgenden bezeichnet.

Wenn der erste Transponder 55 dabei nicht an einem Ort, an dem der Ausleger 75 an dem Mast 73 befestigt ist, sondern an einer von dem Mast entfernten Stelle des Auslegers 75 befestigt ist, muss die von der Auswertungseinrichtung 53a ermittelte Länge der Strecke $\underline{KA}$ bzw. der ermittelte Wert des Abstands der Katze 77 von dem Mast 73 um einen Korrekturwert k berichtigt werden. Die an dem Kranhaken 84 befestigte Wiegeeinrichtung bestimmt ein Gewicht F der Last 81 und sendet eine Information mittels eines Funksignals an die Basis-Sende- und Empfangseinrichtung 53. Die Sende- und Empfangseinrichtung 53 übermittelt die Information über das von der Wiegeeinrichtung gemessene Gewicht F der Last 81 an die Auswertungseinrichtung 53a. Basierend auf der ermittelten Länge der Strecke $\underline{KA}$ und dem Wert des Gewichts F der Last 81 bestimmt die Auswertungseinrichtung 53a ein Lastmoment M unter Berücksichtigung des Korrekturwerts k gemäß einer Gleichung (1).

$$M = (\underline{KA} + k) \cdot F \qquad\qquad (1)$$

Die Auswertungseinrichtung 53a kann das Lastmoment M mit einem zulässigen Wert für das Lastmoment M vergleichen und daraufhin beispielsweise eine Einrichtung, zum Bewegen der Katze so ansteuern, dass das zulässige Lastmoment nicht überschritten wird.

Der vierte Transponder 86 empfängt das Basis-Sendesignal $S_B$, das von der Sende- und Empfangseinrichtung 53 an der Katze 77 abgestrahlt worden ist und sendet daraufhin ein viertes Transpondersignal aus, das von der Sende- und Empfangseinrichtung 53 empfangen wird. Anhand des Zeitpunkts, zu dem das vierte Transpondersignal von der Sende- und Empfangseinrichtung 53 empfangen wird, bestimmt die Auswertungseinrichtung 53a einen Abstand $\underline{ZK}$ des an dem Ziel angebrachten vierten Transponders 86 von der Katze 77. Zugleich bestimmt die Auswertungseinrichtung 53a anhand des Abstands des dritten Transponders 59 von der Sende und Empfangseinrichtung 53 eine vertikale Position der Last 81 bzw. eine Position der Last 81 und daraus einen Abstand KL der Last 81 von der Katze 77. Das Ort, an dem der vierte Transponder 86 angeordnet ist, kann während dem Betrieb des Krans 71 verändert werden, wenn der Arbeitsschritt des Versetzens der Last abgeschlossen ist, so dass die Last 81 zu einem veränderten Ziel hin versetzt werden kann.

Die Auswertungseinrichtung 53a ermittelt aus der Strecke $\underline{ZK}$ und der Strecke $\underline{KL}$ mittels einer Gleichung (2) eine Entfernung der Last 81 beim vierten Transponder 86 und damit dem Ziel, zu dem die Last versetzt werden soll.

$$LZ = \underline{ZK} - \underline{KL} \qquad\qquad (2)$$

Somit kann die Auswertungseinrichtung 53a unter Berücksichtigung der Pendelbewegung der Last 81 bestimmen, ob die Last 81 das Ziel erreicht hat. Die Auswertungseinrichtung 53a übermittelt dann z. B. über ein Funksignal, dass von der Auswertungseinrichtung 53 abgestrahlt wird, an einen Empfänger, der an einem hier nicht gezeigten Steuerplatz des Krans angeordnet ist, eine Länge der Strecke $\underline{LZ}$. Über eine an dem Empfänger angeordnete Anzeige überwacht ein Kranführer eine Länge der Strecke $\underline{LZ}$ und kann in Abhängigkeit von der Länge der Strecke $\underline{LZ}$ eine Einrichtung zum Drehen des Masts 73 des Krans 71, eine Aufzugseinrichtung, die an der Katze 77 angeordnet ist, oder eine Einrichtung zum Bewegen der Katze ansteuern, so dass die Last 81 zu dem Ziel versetzt wird. Vorteilhaft ist daran, dass der Kranführer häufig keine freie Sicht auf das Ziel hat, zu dem die Last 81 versetzt werden soll. Dadurch, dass dem Kranführer die Anzeige die Entfernung der Last 81 von dem Ziel indiziert, ist der Kranführer damit nicht auf die Anweisungen einer weiteren Person, die in der Nähe des Ziels steht, und eine Bewegung der Last zu dem Ziel beobachtet, angewiesen.

Parallel dazu kann die Funktionalität des in dem Kran 71 gemäß der vorliegenden Erfindung eingesetzten LPR-Messsystems 51 überprüft werden. Die Sende- und Empfangseinrichtung 53 empfängt dabei das zweite Transpondersignal $S_{T2}$ von dem an der Spitze des Auslegers 75 angeordneten zweiten Transponder 57 und bestimmt einen Abstand des zweiten Transponders 57 von der Sende- und Empfangseinrichtung 53 an der Katze 77. Die Auswertungseinrichtung 53a bestimmt dann aus dem Vergleich der redundanten Informationen, nämlich dem Abstand der Katze 77 von dem Mast 53 und dem Abstand der Katze 77 von der Spitze des Auslegers 75, ob das aus den Transpondern 55, 57, 59, 86 und der Sende- und Empfangseinrichtung 53 bestehende LPR-Messsystem eine korrekte Funktionalität aufweist.

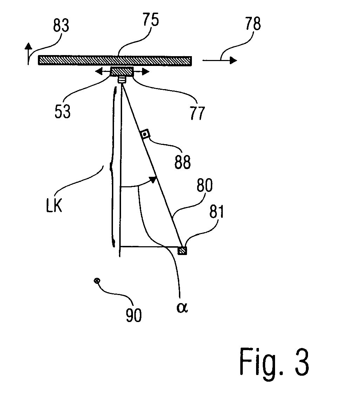

In Fig. 3 ist eine Ausschnittsansicht des Krans 71 gemäß einem weiteren Ausführungsbeispiel der vorliegenden Erfindung gezeigt. Im Folgenden werden gleiche oder gleichwirkende Elemente mit den gleichen Bezugszeichen versehen. Des Weiteren beschränkt sich eine Beschreibung der Funktion des Aufbaus des Krans 71 gemäß einem weiteren Ausführungsbeispiel auf eine Beschreibung der Unterschiede zu dem in Fig. 2 gezeigten Aufbau des Krans 71 gemäß einem Ausführungsbeispiel der vorliegenden Erfindung. Der Kran 71 gemäß einem weiteren Ausführungsbeispiel der vorliegenden Erfindung weist zusätzlich zu dem in Fig. 2 gezeigten Kran 71 gemäß einem Ausführungsbeispiel der vorliegenden Erfindung einen Neigungssensor 88 auf, der an dem Tragseil 80 befestigt ist. Der Neigungssensor 88 bestimmt einen Wert eines Neigungswinkels $\alpha$, um den das Tragseil 80 aus der vertikalen Richtung 83 ausgelenkt wird. Das Tragseil 80 wird dabei sowohl in der horizontalen Richtung 78 entlang der Richtung des Auslegers 75 als auch senkrecht zu der horizontalen Richtung 78 in einer z-Richtung, die durch einen Pfeil 90 dargestellt ist, ausgelenkt.

Der Neigungssensor 88 ermittelt den Wert des Neigungswinkels $\alpha$ und überträgt mittels eines Funksignals ein Neigungssensor-Signal, das von dem Wert des Neigungswinkels $\alpha$ abhängt, an die Sende- und Empfangseinrichtung 53 und damit an die Auswertungseinrichtung 53a. Die Auswertungseinrichtung 53a bestimmt damit eine Auslenkung der Last 81 in einer Ebene parallel zu der Erdoberfläche.

Die Auswertungseinrichtung 53a ermittelt einen zeitlichen Verlauf des Werts der Strecke LK und des Neigungswinkels $\alpha$ und bestimmt daraus eine Beschleunigung der Last 81 in der vertikalen Richtung 83 und in der horizontalen Richtung, also entlang einer Strecke in einer Ebene parallel zur Erdoberfläche.

Die Auswertungseinrichtung 53a ermittelt dabei aus einer zweifachen Ableitung des zeitlichen Verlaufs der Länge der Strecke LK nach der Zeit t eine Beschleunigung $a_v$ in der vertikalen Richtung, wie in Gleichung (3)

$$a_v \approx \frac{d^2 LK}{dt^2} \qquad\qquad (3)$$

dargelegt ist. Des Weiteren ermittelt die Auswertungseinrichtung 53a aus dem zeitlichen Verlauf des Werts des Neigungswinkels $\alpha$ und der Länge der Strecke LK mittels einer zweifachen Ableitung des Produkts aus der Länge der Strecke LK und einer Sinusfunktion des Winkels $\alpha$ nach der Zeit t eine Beschleunigung $a_h$ in einer Ebene parallel zur Erdoberfläche, wie in Gleichung (4) gezeigt ist.

$$a_h \approx \frac{d^2 (LK * \sin \alpha)}{dt^2} \qquad\qquad (4)$$

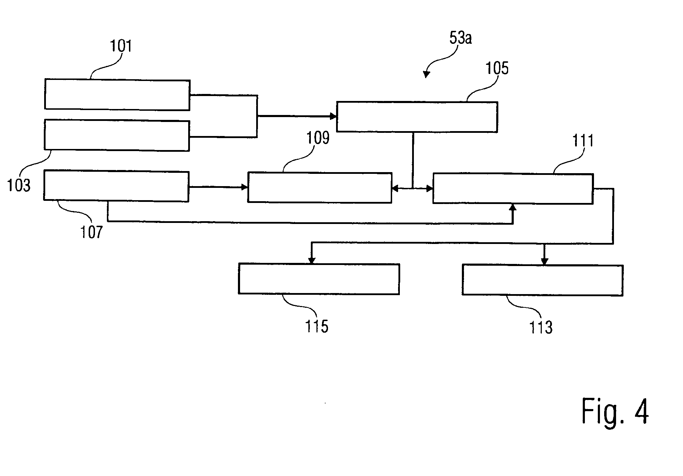

In Fig. 4 wird im Folgenden eine Funktion der Auswertungseinrichtung 53a anhand eines Blockschaltplans erläutert. Die Auswertungseinrichtung 53a weist eine Abstandsmessungs-einrichtung 101 auf, die aus dem Abstand des ersten Transponders 55, und aus dem Abstand des dritten Transponders 59 von der Sende- und Empfangseinrichtung 53 den Abstand der Last 81 von der Katze 77 und den Abstand der Katze 77 von dem Mast 73 bestimmt.

Des Weiteren weist die Auswertungseinrichtung 53a eine Neigungsmessungseinrichtung 103 auf, die anhand des von dem Neigungssensor 88 empfangenen Neigungssensor-Signals den Neigungswinkel $\alpha$ bestimmt. Eine Positionsberechnungs-Einrichtung 105 ist mit der Abstandsmessungs-Einrichtung 101 und der Neigungsmessungseinrichtung 103 gekoppelt und ermittelt aus dem Abstand der Last 81 von dem Mast 73 und der Katze 77 sowie dem Wert des Neigungswinkels $\alpha$ eine Position der Last 81. Eine Last-Messungseinrichtung 107 ermittelt aus dem von der Wiegeeinrichtung empfangenen Wiegeeinrichtungssignal das Gewicht F der Last 81. Eine Lastmoment-Bestimmungseinrichtung 109 ist mit der Lastmessungs-Einrichtung 107 und der Positionsberechnungs-Einrichtung 105 gekoppelt und ermittelt anhand der Position der Last 81 und dem Wert des Gewichts F einen Wert des Lastmoments M.

Eine Überwachungs-Einrichtung 111 ist mit der Lastmoment-Bestimmungseinrichtung 109, der Positionsberechnungs-Einrichtung 105 und der Lastmessungs-Einrichtung 107 gekoppelt und ermittelt anhand eines zeitlichen Verlaufs der Position der Last 81 eine Beschleunigung der Last. Zugleich bestimmt die Überwachungs-Einrichtung 111, ob die Beschleunigung der Last 81, das Lastmoment M oder das Gewicht F der Last einen kritischen Schwellwert überschreiten. Der kritische Schwellwert für das Lastmoment kann dabei z. B. einer Grenzlastkurve entnommen werden.

Die Überwachungs-Einrichtung 111 ist dabei mit einer Einrichtung 113 zur Ermittlung des erweiterten Lastmoments gekoppelt, die aus der Überwachungs-Einrichtung den Wert der Beschleunigung und den Wert des Lastmoments ausliest und daraus eine Größe eines erweiterten Lastmoments ermittelt, in der sowohl der Wert des Lastmoments als auch dynamische Einflüsse berücksichtigt sind. Der Wert der Größe des erweiterten Lastmoments kann dann z. B. von einer Anzeigeeinrichtung an einem Steuerplatz des Krans abgefragt werden. Somit kann ein Kranführer an dem Steuerplatz erkennen, dass das Lastmoment an dem Kran in Kombination mit einer Bewegung der Last 81 sich in einem kritischen Bereich befindet, und beispielsweise daraufhin eine Bewegung der Last, eine Drehung des Masts 73 oder eine Bewegung der Katze entsprechend nachregeln. Die Überwachungs-Einrichtung 111 ist zugleich mit einer Antriebsregelungs-Einrichtung 115 gekoppelt, die einen Wert der Beschleunigung der Last aus der Überwachungs-Einrichtung 111 ausliest und diesen als Regel- oder Störgröße für eine Antriebsregelung des Krans einsetzt, um beispielsweise eine Pendelbewegung der Last 81 in Folge der Kranbewegung zu reduzieren.

In dem in Fig. 2 gezeigten Kran sind vier Transponder 55, 57, 59, 86 an dem Kran 71 bzw. in dessen Arbeitsumfeld angeordnet. Alternativ hierzu könnte jedoch auch nur ein Transponder an einem vorbestimmten Ort gegenüber dem Kran 71 angeordnet werden, wenn die Auswertungseinrichtung 53a nur ein Lastmoment bestimmen soll oder ein Transponder an einem vorbestimmten Ort gegenüber dem Kran angeordnet werden und ein weiterer Transponder an der Last oder an einem Ziel, zu dem die Last versetzt werden soll, angeordnet werden, wenn die Auswertungseinrichtung 53a dazu dient, eine Position der Katze 77 oder der Last 81 zu ermitteln.

Des Weiteren könnte alternativ eine beliebige Anzahl weiterer Transponder an dem Kran 71 oder in einem Umfeld des Krans 71 angeordnet werden, die über weitere Transpondersignale mit der Sende- und Empfangseinrichtung 53 kommunizieren und somit beispielsweise eine Redundanz des Messsystems oder eine höhere Auflösung ermöglichen. Denkbar wäre auch in dem in Fig. 2 gezeigten Kran 71 den zweiten Transponder 57, der eine Messung des Abstände der Katze von dem Mast und der Auslegerspitze ermöglicht und damit eine redundante Bestimmung der Position der Katze ermöglicht, um eine Funktionalität des eingesetzten LPR-Messsystems zu überprüfen, wegzulassen. Des Weiteren könnte der zweite Transponder 57 an einem beliebigen Ort an dem Kran 71 befestigt sein, solange der Ort, an dem der zweite Transponder 57 befestigt ist, von der Katze 77 und dem Ort, an dem der erste Transponder 55 angeordnet ist, beabstandet ist, und die Position des zweiten Transponders 57 von einer Bewegung der Katze 77 unabhängig ist.

Des Weiteren könnte in dem in Fig. 2 gezeigten Kran 71 gemäß einem Ausführungsbeispiel der vorliegenden Erfindung die an dem Kranhaken befestigte Wiegeeinrichtung weggelassen werden, wenn die Auswertungseinrichtung 53a lediglich eine Position der Last 81 bestimmen soll. Oder die Wiegeeinrichtung könnte alternativ nicht an dem Kranhaken befestigt werden, sondern an einem beliebigen anderen Ort an dem Kran angeordnet werden, solange die Wiegeeinrichtung das Gewicht F der Last 81 bestimmen kann.

Die Wiegeeinrichtung an dem Kran 71 kann dabei als eine beliebige Einrichtung zum Bestimmen eines Gewichts der Last 81, wie beispielsweise ein Körper mit einem Dehnungsmessstreifen, der sich in Folge des Gewichts F der Last 81 verformt, ausgeführt sein. In dem in Fig. 2 gezeigten Kran 71 übermittelt die Wiegeeinrichtung über ein Funksignal einen Wert des Gewichts F an die Sende- und Empfangseinrichtung 53 und damit an die Auswertungseinrichtung 53a. Alternativ hierzu kann die Wiegeeinrichtung in beliebiger Art und Weise mit der Auswertungseinrichtung 53a gekoppelt sein, wobei auch eine Kopplung der Wiegeeinrichtung mit der Auswertungseinrichtung 53 über ein Kabel zwischen der Wiegeeinrichtung und der Auswertungseinrichtung 53 denkbar ist.

In dem in Fig. 3 gezeigten Ausschnitt des Krans 71 gemäß einem weiteren Ausführungsbeispiel der vorliegenden Erfindung überträgt der Neigungssensor 88 über ein Funksignal den Wert des Neigungswinkels $\alpha$ durch ein Funksignal an die Sende- und Empfangseinrichtung und damit an die in der Sende- und Empfangseinrichtung 53 angeordnete Auswerteeinrichtung 53a. Alternativ hierzu könnte der Neigungssensor 88 jedoch in beliebiger Art und Weise den Wert des Neigungswinkels $\alpha$ an die Auswertungseinrichtung 53a übermitteln, wie beispielsweise über ein Kabel, das zwischen dem Neigungssensor 88 und der Auswertungseinrichtung 53a angeordnet ist.

Der in Fig. 2 gezeigte Kran 71 gemäß der vorliegenden Erfindung ist als ein Auslegerdrehkran ausgeführt. Alternativ hierzu könnte der Kran auch als eine beliebige kranähnliche Fördereinrichtung, wie z. B. ein Laufkran, ein Mobilkran, eine Hubarbeitsbühne oder ein Schienenlaufkran ausgeführt sein.

Alternativ könnte auch bei dem Kran 71 gemäß der vorliegenden Erfindung eine beliebige Anzahl an weiteren Sende- oder Empfangseinrichtungen 53 an beliebigen vorbestimmten Orten gegenüber dem Kran 71 an dem Kran 71 befestigt sein und mit der Auswertungseinrichtung 53a gekoppelt sein, um beispielsweise eine exaktere Bestimmung des Lastmoments M oder der Position der Last 81 zu ermöglichen.

In der in Fig. 4 gezeigten Ausführungsform der Auswertungseinrichtung 53a ermittelt die Überwachungseinrichtung 111 einen Wert des Lastmoments, eine Position der Last oder einen Wert der Last bzw. deren zeitliche Verläufe und erzeugt daraufhin beispielsweise ein Signal für eine Anzeigeeinrichtung an einem Steuerplatz des Krans. Alternativ hierzu könnte jedoch auch die Überwachungseinrichtung 111 mit der Abstandsmessungs-Einrichtung 101 und der NeigungsmessungsEinrichtung 103 direkt gekoppelt sein, und den Wert bzw. einen zeitlichen Verlauf des Abstands der Katze 77 von dem Mast 73 überwachen, um z. B. festzustellen, ob die Last 81 in einen kritischen Bereich transportiert wird. Des Weiteren könnte in der Auswertungseinrichtung 53a die Überwachungseinrichtung 111 direkt mit der NeigungsmessungsEinrichtung 105 gekoppelt sein, um den Wert des Neigungswinkels bzw. dessen zeitlichen Verlauf zu überwachen.

Bei dem Kran 71 gemäß der vorliegenden Erfindung könnte alternativ auch der vierte Transponder 86 nicht an dem Ziel sondern an einem beliebigen definierten Ort positioniert werden, der von dem Ort, an dem der erste Transponder 55 befestigt ist, beabstandet ist, wobei der vierte Transponder 57 vorzugsweise bei einer Bewegung des Auslegers 75 an seinem Ort verharrt, so dass die Auswertungseinrichtung 53a basierend auf einer Information über die Position des vierten Transponders 57 einen Abstand der Last 81 zu dem Ziel bestimmen kann.

Bei dem Kran 71 gemäß einem Ausführungsbeispiel der vorliegenden Erfindung ist die Auswertungseinrichtung 53a in der Sende- und Empfangseinrichtung 53 angeordnet. Jedoch sind beliebige Anordnungen der Auswertungseinrichtung 53a hierzu Alternativen, wobei die Sende- und Empfangseinrichtung und die Auswertungseinrichtung 53a auch als physisch getrennte Einheiten ausgeführt sein können, die miteinander elektrisch gekoppelt sind.

Bei dem in Fig. 2 gezeigten Kran 71 gemäß einem Ausführungsbeispiel der vorliegenden Erfindung ist der erste Transponder 55 so an dem Ausleger 75 befestigt, dass ein Abstand von einem Ort, an dem der Ausleger 75 an dem Mast 73 des Krans 71 befestigt ist, vorzugsweise in einem Bereich von weniger als 0,5 m liegt. Jedoch sind beliebige Anordnungen, bei denen der erste Transponder 55 an einem vorbestimmten Ort gegenüber dem Kran 71 befestigt ist, hierzu Alternativen.

Bei dem Kran 71 gemäß der vorliegenden Erfindung ist der zweite Transponder 57 bevorzugt an dem Ausleger 75 befestigt und noch bevorzugter an einem Ort befestigt, der von einer Spitze des Auslegers 75 weniger als 0,5 m entfernt ist. Jedoch sind beliebige Anordnungen des zweiten Transponders 57 an dem Ausleger 75 oder sogar an einem vorbestimmten Ort an dem Kran 71 hierzu Alternativen.

Bei dem Kran 71 ist der dritte Transponder 59 an dem Kranhaken bzw. Haken 84 befestigt, jedoch könnte der dritte Transponder 59 auch an der Last 81 befestigt sein, oder alternativ weggelassen werden, wenn der vierte Transponder 86 an dem Ziel, zu dem die Last 81 befördert werden soll, befestigt ist.

Bei dem Kran 71 gemäß der vorliegenden Erfindung strahlt die Sende- und Empfangseinrichtung 53 in regelmäßigen Abständen bzw. einer periodischen Abfolge das Basis-Sendesignal $S_B$ ab. Jedoch könnte ein Abstrahlen des Basis-Sendesignals $S_B$ alternativ hierzu zu beliebigen Zeitpunkten oder in beliebigen, auch nicht-periodischen Intervallen erfolgen.

Bei dem Kran 71 gemäß der vorliegenden Erfindung ist die Zugeinrichtung bzw. Aufzugseinrichtung an einem Fuß des Masts 73 bzw. an dem Mastfuß befestigt jedoch könnte alternativ die Aufzugseinrichtung auch vorzugsweise an dem Gegenausleger des Krans 71 oder an einer beliebigen Position an dem Kran 71 befestigt sein, solange sie die vertikale Bewegung einer an dem Tragseil 80 befestigten Last 81 ermöglicht.

Bei dem Kran 71 gemäß der vorliegenden Erfindung übermittelt die Auswertungseinrichtung 53a vorzugsweise über ein Funksignal eine Länge der Strecke LZ an den Empfänger. Jedoch sind beliebige Medien, über die die Auswertungseinrichtung 53a die Länge der Strecke an den Empfänger übermittelt, wie z. B. ein Kabel, hierzu Alternativen.

**Patentansprüche**

1.  Ein Kran (71) mit:

    einer Katze (77);
    einer Basis-Sende- und Empfangseinrichtung (53), die an der Katze (77) befestigt ist und ausgelegt ist, um ein Basis-Sendesignal ($S_B$) abzustrahlen und ein erstes ($S_{T1}$) und ein zweites ($S_{T3}$) Transpondersignal zu empfangen;
    einem ersten Transponder (55), der an einem ersten vorbestimmten Ort gegenüber dem Kran (71) befestigt ist und ausgelegt ist, um das Basis-Sendesignal ($S_B$) von der Basis-Sende- und Empfangseinrichtung (53) zu empfangen und das erste Transpondersignal ($S_{T1}$) auf einen Empfang des Basis-Sendesignals ($S_B$) hin abzustrahlen;
    einem zweiten Transponder (59, 86), der an einer Last (81), die von dem Kran (71) versetzt werden soll, einem Haken (84), an dem die Last (81) befestigt ist, oder einem Ziel, zu dem die Last (81) befördert werden soll, befestigt ist und ausgelegt ist, um das Basis-Sendesignal ($S_B$) zu empfangen, und das zweite Transpondersignal ($S_{T3}$) auf den Empfang des Basis-Sendesignals ($S_B$) hin abzustrahlen, wobei das zweite Transpondersignal ($S_{T3}$) zu dem ersten Transpondersignal ($S_{T1}$) unterschiedlich ist; und
    einer Auswertungseinrichtung (53a), die mit der Basis-Sende- und Empfangseinrichtung (53) gekoppelt ist, und ausgelegt ist, um basierend auf dem ersten Transpondersignal ($S_{T1}$) und dem Basis-Sendesignal ($S_B$) einen Abstand des ersten Transponders (55) von der Katze (77) zu bestimmen und basierend auf dem zweiten Transpondersignal ($S_{T3}$) und dem Basis-Sendesignal ($S_B$) einen Abstand des zweiten Transponders ($S_{T3}$) von der Katze (77) zu ermitteln.

2.  Kran (71) gemäß Anspruch 1, bei dem der erste Transponder (55) an einem Ausleger (75) des Krans (71) befestigt ist.

3.  Kran (71) gemäß Anspruch 2, bei dem der erste Transponder (55) an einem Ort an dem Ausleger (75) befestigt ist, der von einem Ort, an dem der Ausleger (75) an einem Mast (73) des Krans (71) angebracht ist, weniger als 0,5 m entfernt ist.

4.  Kran (71) gemäß einem der Ansprüche 1 bis 3, bei dem der zweite Transponder (57) an dem Haken (84), an dem die Last (81) befestigt ist, angebracht ist, und ein dritter Transponder (86) an einem vordefinierten Ort befestigt ist, der von dem Ort, an dem der erste Transponder (55) befestigt ist, beabstandet ist, wobei die Position des zweiten vordefinierten Orts von einer Bewegung des Auslegers (75) unabhängig ist.

5. Kran (71) gemäß Anspruch 4, bei dem der dritte Transponder (59) an dem Ziel, zu dem die Last (81) befördert werden soll, befestigt ist.

6. Kran (71) gemäß einem der Ansprüche 1 bis 5, bei dem ein vierter Transponder (57), der von dem ersten Transponder (55) beabstandet ist, an einem Ausleger (75) des Krans (71) befestigt ist, wobei die Basis-Sende- und Empfangseinrichtung (53) ausgelegt ist, um ein von dem vierten Transponder (57) abgestrahltes viertes Transpondersignal zu empfangen, und die Auswertungseinrichtung (53a) ausgelegt ist, um basierend auf dem Basis-Sendesignal ($S_B$) und dem vierten Transpondersignal einen Abstand der Katze (77) von dem vierten Transponder (57) zu bestimmen und basierend auf einem Vergleich des Abstands des ersten Transponders (55) von der Katze (77) und des Abstands des vierten Transponders (57) von der Katze (77) eine Funktionalität des ersten Transponders (55), der Basis-Sende- und Empfangseinrichtung (53) oder der Auswertungseinrichtung (53a) zu überprüfen.

7. Kran (71) gemäß Anspruch (6), bei dem der vierte Transponder (59) in einem Abstand von weniger als 0,5 m von einer Spitze des Auslegers (75) entfernt ist.

8. Kran (71) gemäß einem der Ansprüche 1 bis 7, bei dem die Auswertungseinrichtung (53a) ausgelegt ist, um basierend auf einer Laufzeit des Basis-Sende-Signals ($S_B$) von der Basis-Sende- und Empfangseinrichtung (53) zu dem ersten Transponder (55) oder einer Laufzeit des ersten Transpondersignals ($S_{T1}$) von dem ersten Transponder (55) zu der Basis-Sende- und Empfangseinrichtung (53) den Abstand des ersten Transponders (55) von der Katze (77) zu bestimmen und basierend auf einer Laufzeit des Basis-Sende-Signals ($S_B$) von der Basis-Sende- und Empfangseinrichtung (53) zu dem zweiten Transponder (59, 86) oder einer Laufzeit des zweiten Transpondersignals ($S_{T3}$) von dem zweiten Transponder (59, 86) zu der Basis-Sende- und Empfangseinrichtung (53) den Abstand des zweiten Transponders (59, 86) von der Basis-Sende- und Empfangseinrichtung (53) zu bestimmen.

9. Kran (71) gemäß einem der Ansprüche 1 bis 8, der als ein Auslegerdrehkran ausgeführt ist.

10. Kran (71) gemäß einem der Ansprüche 1 bis 9, bei dem der zweite Transponder (59) an dem Haken (81) befestigt ist, und ein Neigungssensor (88) an einem Tragseil (80) oder einem Kranhaken (84) befestigt ist, und ausgelegt ist, um ein Neigungs-Sensorsignal zu erzeugen, das von einem Winkel $\alpha$ zwischen dem Tragseil (80) und dem Ausleger (75) abhängig ist, wobei die Auswertungseinrichtung (53a) mit dem Neigungssensor (88) gekoppelt ist und ausgelegt ist, um das Neigungssensor-Signal zu empfangen und aus dem zweiten Transpondersignal ($S_{T3}$) und dem Neigungssensor-Signal einen Abstand der Last (81) von der Katze (77) in einer Richtung (83) parallel zu einem Mast (73) des Krans (71) und einen Abstand in einer Richtung (78) senkrecht zu dem Mast (73) des Krans (71) zu bestimmen.

11. Kran (71) gemäß Anspruch 10, bei dem die Auswertungseinrichtung (53) ausgelegt ist, um aus dem Neigungssensor-Signal und dem zweiten Transpondersignal ($S_{T3}$) zu einem ersten Zeitpunkt, einem zweiten Zeitpunkt und einem dritten Zeitpunkt eine Beschleunigung ($a_v$) in der Richtung (83) parallel zu dem Mast (73) und eine Beschleunigung ($a_h$) in der Richtung (78) senkrecht zu dem Mast (73) des Krans (71) zu bestimmen.

12. Kran (71) gemäß Anspruch 11, bei dem die Auswertungseinrichtung (53a) mit einer Aufzugseinrichtung, einer Einrichtung zum Bewegen der Katze oder einer Einrichtung zum Drehen des Masts (73) gekoppelt ist, und ausgelegt ist, um den Wert der Beschleunigung ($a_v$) in der Richtung (83) parallel zu dem Mast (73) oder die Beschleunigung ($a_h$) senkrecht zu dem Mast (73) mit einem kritischen Schwellwert zu vergleichen, und die Aufzugseinrichtung, die Einrichtung zum Bewegen der Katze (77) oder die Einrichtung zum Drehen des Masts (73) anzusteuern, wenn der kritische Schwellwert überschritten wird.

13. Kran (71) gemäß einem der Ansprüche 1 bis 12, bei dem die Basis-Sende- und Empfangseinrichtung (53) ausgelegt ist, um in einer periodischen Abfolge das Basis-Sende-Signal ($S_B$) abzustrahlen.

14. Kran (71) gemäß einem der Ansprüche 1 bis 13, mit einem Empfänger an einem Steuerplatz des Krans (71), wobei die Auswertungseinrichtung (53a) und die Basis-Sende- und Empfangseinrichtung (53) als eine physische Einheit ausgeführt sind und die Auswertungseinrichtung (53a) ausgelegt ist, um ein Funksignal, das eine Information über den Abstand des ersten Transponders (55) und des zweiten Transponders (59, 86) von der Katze (77) aufweist, abzustrahlen, wobei der Empfänger ausgelegt ist, um das Funksignal zu empfangen und den Abstand des ersten Transponders (55) und des zweiten Transponders (59, 86) von der Katze (77) aus dem Funksignal zu ermitteln und anzuzeigen.

15. Ein Kran (71), mit:

einer Katze (77);
einer Basis-Sende- und Empfangseinrichtung (53), die an der Katze (77) befestigt ist und ausgelegt ist, um ein Basis-Sendesignal ($S_B$) abzustrahlen und ein Transpondersignal ($S_{T1}$) zu empfangen;
einer Wiegeeinrichtung, die ausgelegt ist, um ein Gewicht (F) einer Last (81), die von dem Kran (71) versetzt wird, zu bestimmen;
einem Transponder (55), der an einem vorbestimmten Ort gegenüber dem Kran (71) befestigt ist und ausgelegt ist, um auf den Empfang des Basis-Sendesignals ($S_B$) das Transpondersignal ($S_{T1}$) abzustrahlen; und
eine Auswertungseinrichtung (53a), die mit der Basis-Sende- und Empfangseinrichtung (53) und der Wiegeeinrichtung gekoppelt ist und ausgelegt ist, um basierend auf dem Gewicht (F) der Last (81) dem Basis-Sendesignal ($S_B$) und dem Transpondersignal ($S_{T1}$) ein Lastmoment (M) an dem Kran (71) zu ermitteln.

16. Kran (71) gemäß Anspruch 15, bei dem die Auswertungseinrichtung (53a) ausgelegt ist, um einen Abstand der Katze (77) von einem Mast (73) des Krans (71) zu bestimmen und aus dem Abstand der Katze (77) von dem Mast (73) das Lastmoment (M) zu ermitteln.

17. Kran (71) gemäß einem der Ansprüche 15 oder 16, bei dem die Auswertungseinrichtung (53) ausgelegt ist, um das Lastmoment (M) mit einen Grenzwert für ein zulässiges Lastmoment zu vergleichen.

18. Kran (71) gemäß Anspruch 17, bei dem die Auswertungseinrichtung (53a) mit einer Einrichtung zum Bewegen der Katze gekoppelt ist, und ausgelegt ist, um eine Bewegung der Katze so anzusteuern, dass das zulässige Lastmoment nicht überschritten wird.

19. Kran (71) gemäß einem der Ansprüche 15 bis 18, bei dem der Transponder (55) an einem Ausleger (75) des Krans (71) befestigt ist.

20. Kran (71) gemäß Anspruch 19, bei dem der Transponder (55) in einem Abstand von weniger als 0,5 m von einem Ort, an dem der Ausleger (75) des Krans (71) an einem Mast (73) des Krans (71) angebracht ist, befestigt ist.

21. Kran (71) gemäß einem der Ansprüche 15 bis 20, bei dem ein weiterer Transponder (57) an einem Ausleger (75) des Krans (71) befestigt ist, wobei die Basis-Sende- und Empfangseinrichtung (53) ausgelegt ist, um ein von dem weiteren Transponder (59) abgestrahltes weiteres Transpondersignal zu empfangen und die Auswertungseinrichtung (53a) ausgelegt ist, um basierend auf dem Transpondersignal (ST1) einen Abstand des Transponders (55) von der Katze (77) zu bestimmen und basierend auf dem Basis-Sendesignal ($S_B$) und dem weiteren Transpondersignal einen Abstand der Katze (77) von dem weiteren Transponder (59) zu bestimmen und basierend auf einem Vergleich des Abstands des Transponders (55) von der Katze (77) und des Abstands des weiteren Transponders (57) von der Katze (77) eine Funktionalität des Transponders (55), der Basis-Sende- und Empfangseinrichtung (53) oder der Auswertungseinrichtung (53a) zu überprüfen.

22. Kran (71) gemäß einem der Ansprüche 15 bis 21, bei dem ein weiterer Transponder (57) an dem Ausleger (75) in einem Abstand von weniger als 0,5 m von einer Spitze des Auslegers (75) entfernt befestigt ist.

23. Kran (71) gemäß einem der Ansprüche 15 bis 22, bei dem die Auswertungseinrichtung (53a) ausgelegt ist, um aus einer Laufzeit des Basis-Sendesignals ($S_B$) von der Basis-Sende- und Empfangseinrichtung (53) zu dem Transponder (55) oder aus einer Laufzeit des Transpondersignals ($S_{T1}$) von dem Transponder (55) zu der Basis-Sende- und Empfangseinrichtung (53) das Lastmoment (M) zu ermitteln.

24. Kran (71) gemäß einem der Ansprüche 15 bis 23, bei dem die Wiegeeinrichtung von der Basis-Sende- und Empfangseinrichtung (53) beabstandet angeordnet ist ausgelegt ist, um ein Wiege-Funksignal, das von einem Wert eines Gewichts (F) der Last (81) abhängt, abzustrahlen, wobei die Basis-Sende- und Empfangseinrichtung (53) ausgelegt ist, um das Wiege-Funksignal zu empfangen und den Wert des Gewichts (F) der Last (81) zu bestimmen.

25. Kran (71) gemäß einem der Ansprüche 15 bis 24, bei dem die Basis-Sende- und Empfangseinrichtung (53) ausgelegt ist, um in einer periodischen Abfolge das Basis-Sendesignal ($S_B$) abzustrahlen.

26. Kran (71) gemäß einem der Ansprüche 1 bis 25, mit einem Empfänger an einem Steuerplatz des Krans, bei dem die Basis-Sende- und Empfangseinrichtung (53) und die Auswertungseinrichtung (53a) als eine physische Einheit ausgeführt sind und die Auswertungseinrichtung (53a) ausgelegt ist, um ein Funksignal abzustrahlen, das von einem Wert des Lastmoments (M) abhängig ist und der Empfänger ausgelegt ist, um das Funksignal zu empfangen und den Wert des Lastmoments (M) aus dem Funksignal zu bestimmen und anzuzeigen.

27. Kran (71) gemäß einem der Ansprüche 15 bis 26, der als ein Auslegerdrehkran ausgeführt ist.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10336084 A1